# EUROPEAN PATENT APPLICATION

(11) **EP 4 451 396 A1**
(43) Date of publication of application: **23.10.2024**
(21) Application number: 23197557.4
(22) Date of filing: 14.09.2023
(51) Int. Cl.: H01M 10/04, H01M 10/44, H01M 50/20

(54) **CONTROL METHOD OF CONSTRAINED DEVICE**

(30) Priority: 17.04.2023 CN 202310413654
(71) Applicant: Guangdong HYNN Technologies Co., Ltd., Dongguan, Guangdong 518000 (CN)
(72) Inventor: Zhou, Haiyang, Dongguan (CN); Yong, Tang, Dongguan (CN); Shicheng, Wei, Dongguan (CN); Shoumo, Wang, Dongguan (CN)
(74) Representative: Meyer, Thorsten

(57) **Abstract**

A control method of a constrained device includes a constrained process and an unconstrained process: after system initialization, starting in an automatic mode, determining if a tray is in a zone A and a zone B of the constrained device, if yes, lifting the tray; otherwise, requesting a conveyer to feed with a tray, and lifting the tray after the tray is in place; independently performing a constrained or unconstrained operation in the zone A or the zone B to constrain or release batteries in the zone A or the zone B; judging if all the batteries in the zone A and the zone B are constrained or unconstrained, if yes, discharging the tray. The method can perform independent constrained or unconstrained operation in different zones, without pressure interference; meanwhile the control is convenient, thereby greatly improving the precision and efficiency of the constrained or unconstrained operation.

## Description

### FIELD OF THE INVENTION

The present application relates to the technical field of constrained device control, in particular to a control method of a constrained device.

### BACKGROUND OF THE INVENTION

During the formation process of hard-shell lithium batteries, it's necessary to constrain and compact the lithium batteries to maintain the predetermined shape thereof. A constrained device is a common device used for constraining and pressing the lithium batteries. For example, Chinese patent application CN111261920A discloses a constrained and unconstrained device, including a battery tray for fixing the battery, a constrained mechanism and an unconstrained mechanism. The battery tray includes an outer frame and a number of pressing plates arranged across the outer frame, and one side or opposite sides of the pressing plate is provided with a first inserting part. The constrained mechanism includes at least one connecting member which is pressed against a contact plate and a first driving assembly which drives the connecting member to move. The unconstrained mechanism includes a plurality of second inserting parts engaged with the first inserting part. The batteries are placed directly between the adjacent pressing plates of the battery tray. The first driving assembly drives the pressing plates to move, so that each battery can be constrained and pressed by the pressing plates through force transmission. When released and unconstrained, the first inserting part is engaged with the second inserting part, and then a driving assembly drives the pressing plates to release the batteries successively to complete the unconstrained operation. Such a system combining with the constrained and unconstrained device is beneficial to save room and reduce production costs.

The existing constrained device for lithium batteries generally performs the constrained or unconstrained operation in a single zone, that is, only a single row of lithium batteries may be constrained or unconstrained at a time. It's unachievable to independently perform the constrained or unconstrained operation in different zones, resulting in low efficiency. In addition, in the existing constrained device for lithium batteries, after the batteries are pressed, the tray is fixed by the screw, and long screw and thin nut are used. As a result, there may be deviation and misalignment between the screw and the nut axis during the screw rotating process, which increases the failure rate of the equipment.

### SUMMARY OF THE INVENTION

Aiming at the shortcomings of the prior art, the present application provides a control method of a constrained device, which can independently constrain or release two rows of batteries and perform independent constrained or unconstrained operation in different zones, without pressure interference, meanwhile the control is convenient, thereby greatly improving the precision and efficiency of the constrained or unconstrained operation.

To achieve the above objective, the present application provides a control method of a constrained device including:
S 1, a constrained process: after system initialization, starting in an automatic mode, determining if a tray is in a zone A and a zone B of the constrained device, if yes, lifting the tray; otherwise, requesting a conveyer to feed with a tray, and lifting the tray after the tray is in place; independently performing a constrained operation in the zone A or the zone B to constrain batteries in the zone A or the zone B once the tray in the zone A or the zone B is lifted in place; judging if all the batteries in the zone A and the zone B are constrained and pressed, if yes, discharging the tray; otherwise, re-constraining all the batteries in the zone A and the zone B, and then discharging the tray;
S2, an unconstrained process: after system initialization, starting in an automatic mode, determining if a tray is in a zone A and a zone B of the constrained device, if yes, lifting the tray; otherwise, requesting a conveyer to feed with a tray, and lifting the tray after the tray is in place; independently performing an unconstrained operation in the zone A or the zone B to release batteries in the zone A or the zone B once the tray in the zone A or the zone B is lifted in place; judging if all the batteries in the zone A and the zone B are unconstrained and released, if yes, discharging the tray; otherwise, rechecking and releasing all the batteries in the zone A and the zone B, and then discharging the tray.

As a preferred embodiment, the constrained operation in the zone A or the zone B comprises rotating a screw bit to extend an slider cylinder, stopping the rotation once the screw bit are screwed into a screw, and performing a forward motion of a push plate shaft to a preset position, rotating the screw to constrain and press the batteries in the tray; once a torque of a screw shaft of the screw reaches a preset torque, judging if the screw is rotated in place by judging if the slider cylinder is extended in place; after the rotation of the screw is completed, disconnecting an enable signal of the screw, retracting the slider cylinder, restoring the push plate shaft to a safe position, and lowering the slider cylinder to discharge the tray normally.

As a preferred embodiment, the unconstrained operation in the zone A or the zone B comprises rotating a screw bit to extend outside, and stopping the rotating once the screw bit are screwed into a screw; performing a forward motion of a push plate shaft to a preset position, and reversely rotating the screw to release the batteries in the tray; stopping the rotation of the screw once a screw shaft of the screw reaches a position; after the rotation of the screw is completed, disconnecting an enable signal of the screw, retracting the slider cylinder, clamping a lining of the tray by a clamp cylinder, and then performing a backward motion of the push plate shaft to a preset position, releasing the tray, restoring the push plate shaft to a safe position, and lowering the slider cylinder to discharge the tray normally.

As a preferable embodiment, the forward motion of the push plate shaft during the constrained operation comprises three sections: after the screw bit are screwed into the screw and stopped with rotation, the push plate shaft moving forward at a first speed for a first section; once a position of the first section is matched with a pressure of the first section, moving forward the push plate shaft moving forward at a second speed for a second section; once a position of the second section is matched with a pressure of the second section, the push plate shaft moving forward at a third speed lower than the first and second speeds for a third section; and once a position of the third section is matched with a pressure of the third section, rotating the screw.

As a preferable embodiment, the forward motion of the push plate shaft during the unconstrained operation comprises three sections: after the screw bit are screwed into the screw and stopped with rotation, the push plate shaft moving forward at a first speed for a first section; once a position of the first section is matched with a pressure of the first section, moving forward the push plate shaft moving forward at a second speed for a second section; once a position of the second section is matched with a pressure of the second section, the push plate shaft moving forward at a third speed lower than the first and second speeds for a third section; and once a position of the third section is matched with a pressure of the third section, clamping the tray by the clamp cylinder, and reversely rotating the screw.

In comparison with the prior art, the beneficial effects of control method of a constrained device provided by the present application are as follows.

Firstly, the control method of a constrained device of the present application is convenient to operate, which can independently constrain or release two rows of batteries and perform independent constrained or unconstrained operation in different zones, without pressure interference, thereby greatly improving the precision and efficiency of the constrained or unconstrained operation.

Secondly, the control method of a constrained device of the present application is configured with a three-section speed mode for the push plate shaft, namely the push plate shaft is configured with different speeds at different positions, which ensures the stability of the pressure meanwhile ensures the production capacity. Further, the slider cylinder is extended during the rotation of the screw shaft, thus it's ensured that the screw bit may be completely screwed into the screw. When the slider cylinder is retracted, the enable signal of the screw shaft is disconnected first, which ensures that the screw bit and the screws are in movable states, so as to reduce the operation failure of the constrained device.

### BRIEF DESCRIPTION OF THE DRAWINGS

The accompanying drawings facilitate an understanding of the various embodiments of this present application. In such drawings:
FIG. 1 is a flowchart of a constrained process of the present application;
FIG. 2 is a flowchart of an unconstrained process of the present application;
FIG. 3 is a flowchart of a constrained operation in a single zone of the present application; and
FIG. 4 is a flowchart of an unconstrained operation in a single zone of the present application.

### DETAILED DESCRIPTION OF ILLUSTRATED EMBODIMENTS

A clear and complete description of the technical solution in the embodiments of the present invention is made in combination with the drawings attached. Obviously, the embodiments described are only a part of the embodiments of the invention. Other embodiments obtained by persons ordinarily skilled in the art without creative labor are within the scope of protection of the present invention.

The control system of the constrained device includes two rows of double-constrained motors which respectively control the pressure on both sides of the constrained tray, so that the actions on both sides are controlled separately without any interference, thereby improving the pressure control precision. A screw shaft is connected with a screw bit via a spring, which may prevent rotation stuck of the screw due to the deviation of the screw with the nut axis and the screw bit during the screw rotating process. Such a configuration of connecting the screw shaft with the screw bit via springs may also reduce the gear ratio of the reduction gear and reduce the wear of the screw and nut due to excessive torque, thus reducing the failure rate of the equipment.

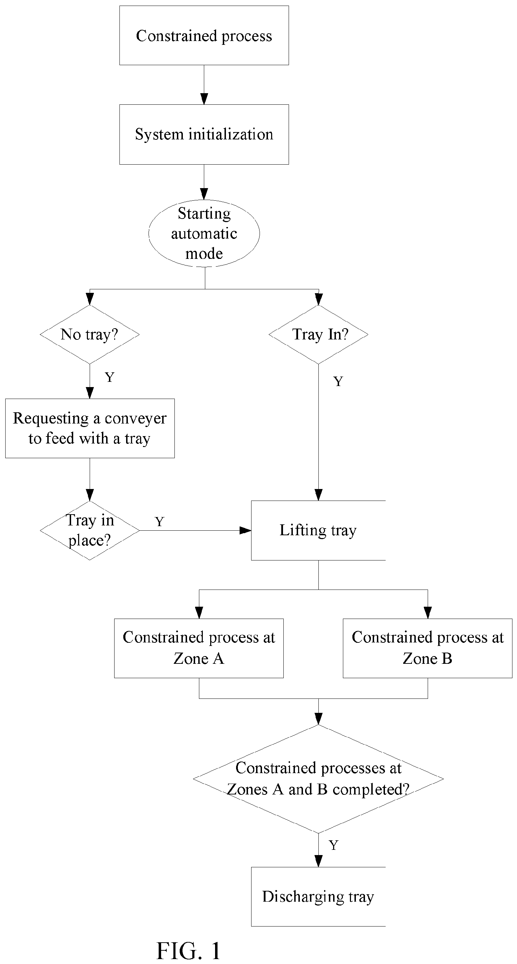

Referring to FIGs. 1-4, a control method of a constrained device includes a constrained process and an unconstrained process.

In the constrained process, different actions will be carried out by judging if there is a tray in the device including zone A and zone B; only after the actions in the two zones are completed at the same time, the tray will be discharged to complete the whole process.

Referring to FIG. 1, the constrained process specifically includes: after system initialization, starting in an automatic mode, determining if a tray is in a zone A and a zone B of the constrained device, if yes, lifting the tray; otherwise, requesting a conveyer to feed with a tray, and then lifting the tray after the tray is in place; independently performing a constrained operation in the zone A or the zone B to constrain batteries in the zone A or the zone B once the tray in the zone A or the zone B is lifted in place; then judging if all the batteries in the zone A and the zone B are constrained and pressed, if yes, discharging the tray; otherwise, re-constraining all the batteries in the zone A and the zone B, and then discharging the tray. In actual operation, two rows of batteries in zone A and zone B can be independently restrained, with independent pressure control without interference, which greatly improves the efficiency of constraint.

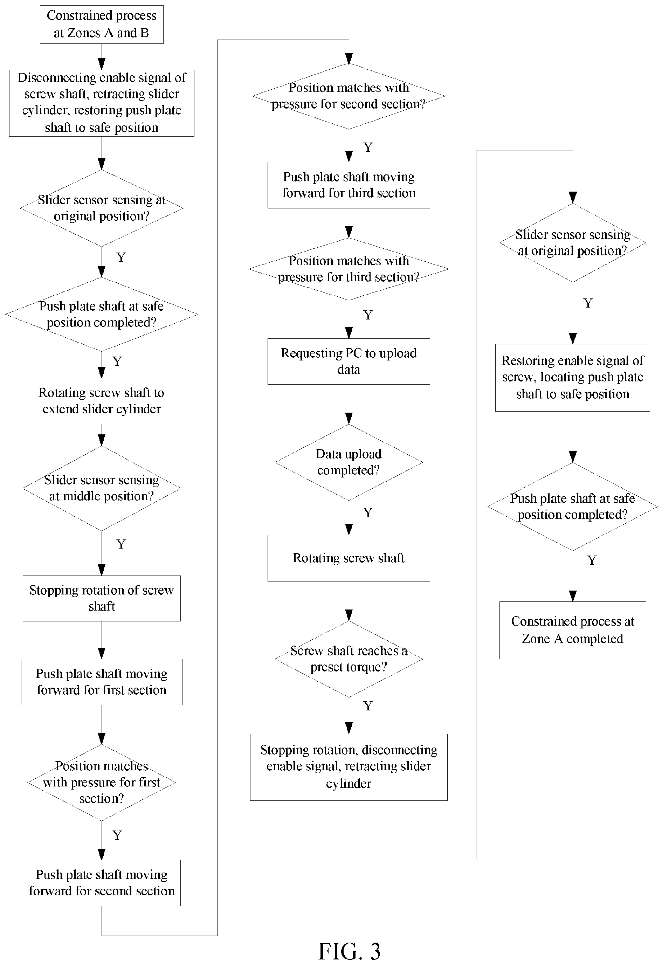

Referring to FIG. 3 showing a flowchart of the constrained operation in a single zone, such as zone A or zone B with the same operation. In the constrained operation, the method includes rotating a screw bit at a low speed to extend a slider cylinder, stopping the rotation of the screw bit once the screw bit are screwed in the screw, and then performing a forward motion of a push plate shaft. Specifically, the forward motion of the push plate shaft includes three sections. After the screw bit are screwed into the screw and stopped with rotation, the push plate shaft moves forward at a first speed (e.g. 0.06m/s) for a first section; once a position of the first section is successfully matched with a pressure of the first section, the push plate shaft moves forward at a second speed (e.g. 0.03m/s) for a second section; once a position of the second section is successfully matched with a pressure of the second section, the push plate shaft moves forward at a third speed (greatly lower than the first and second speeds, e.g. 0.005m/s) for a third section. Once a position of the third section is successfully matched with a pressure of the third section, indicating that the push plate shaft moves forward to a preset position, the screw starts to be rotated rapidly. When a torque of the screw shaft reaches a preset torque, it's judged if the screw is rotated in place by judging if the slider cylinder is extended in place. After the rotation of the screw is completed, an enable signal of the screw is disconnected, the slider cylinder is retracted, and the push plate shaft is restored to a safe position. In such a way, a three-section speed mode is set for the push plate shaft, namely the push plate shaft is configured with different speeds at different positions, which ensures the stability of the pressure meanwhile ensures the production capacity. Furthermore, the push plate shaft is set with different pressure ranges in different positions for the three sections, which ensures the stroke and meanwhile ensures normal pressure. Moreover, the slider cylinder is extended during the rotation of the screw shaft, thus it's ensured that the screw bit may be completely screwed into the screw. After the rotation of the screw is completed, the enable signal of the screw shaft is disconnected to retract the slider cylinder, which effectively avoids the deflection between the screw shaft and the screw bit during the loosening process of the screw bit and the screw shaft, to reduce the slider cylinder failure retract and the failure rate of the equipment.

In the unconstrained process, different actions will be performed by judging if there is a tray in the device including zone A and zone B; only after the actions in the two zones are completed at the same time, the tray will be discharged to complete the whole process.

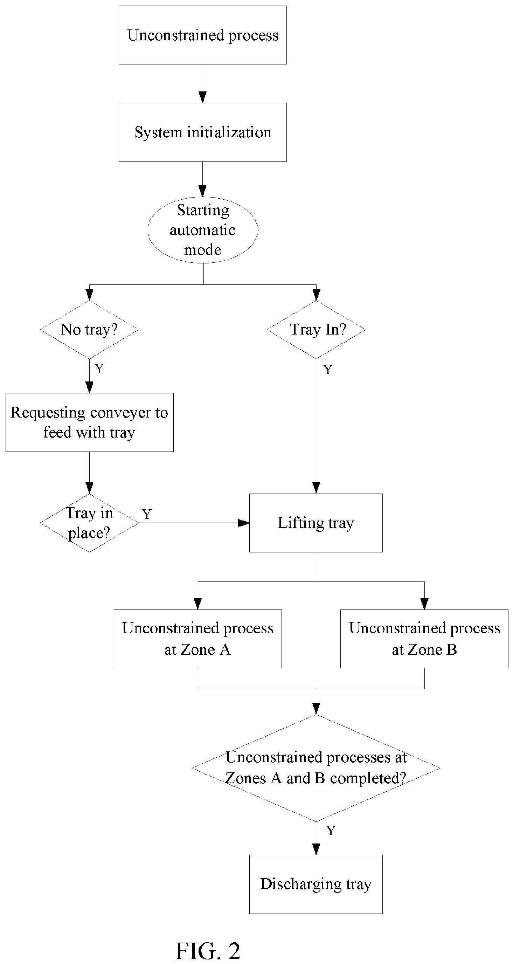

Referring to FIG. 2, the unconstrained process specifically includes: after system initialization, starting in an automatic mode, determining if a tray is in a zone A and a zone B of the constrained device, if yes, lifting the tray; otherwise, requesting a conveyer to feed with a tray, and then lifting the tray after the tray is in place; independently performing an unconstrained operation in the zone A or the zone B to release batteries in the zone A or the zone B once the tray in the zone A or the zone B is lifted in place; then judging if all the batteries in the zone A and the zone B are unconstrained and released, if yes, discharging the tray; otherwise, rechecking and releasing all the batteries in the zone A and the zone B, and then discharging the tray. In actual operation, two rows of batteries in zone A and zone B can be independently released, with independent pressure control without interference, which greatly improves the efficiency of unconstrained operation.

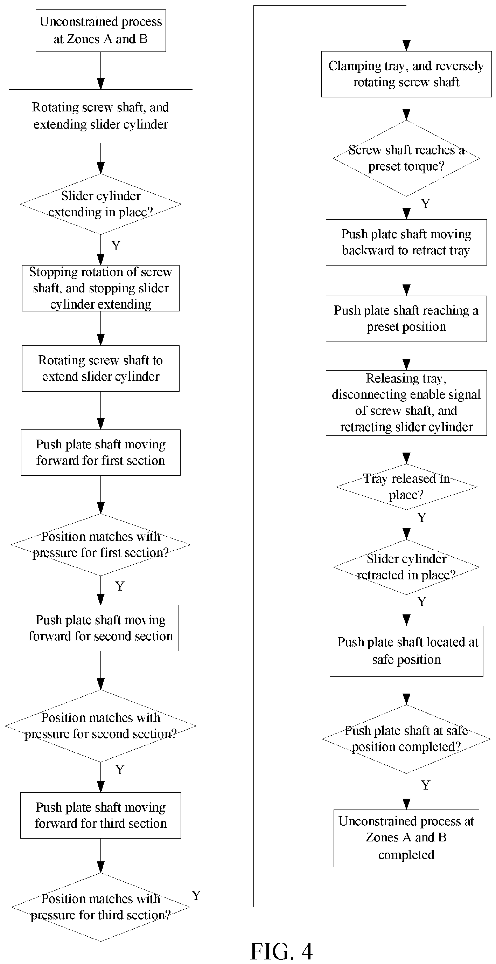

Referring to FIG. 4 showing a flowchart of the unconstrained operation in a single zone, such as zone A or zone B with the same operation. In the constrained operation, the method specifically includes rotating a screw bit at a low speed to extend a slider cylinder, stopping the rotation of the screw bit once the screw bit are screwed in the screw, and then performing a forward motion of a push plate shaft. Specifically, the forward motion of the push plate shaft includes three sections. After the screw bit are screwed into the screw and stopped with rotation, the push plate shaft moves forward at a first speed (e.g. 0.06m/s) for a first section; once a position of the first section is successfully matched with a pressure of the first section, the push plate shaft forward moves at a second speed (e.g. 0.03m/s) for a second section; once a position of the second section is successfully matched with a pressure of the second section, the push plate shaft moves forward at a third speed (greatly lower than the first and second speeds, e.g. 0.005m/s) for a third section; once a position of the third section is successfully matched with a pressure of the third section, indicating that the push plate shaft moves forward to a preset position, the clamp cylinder clamps the tray, and the screw starts to be reversely rotated rapidly to release the batteries in the tray. Once the screw shaft reaches to a middle position, the rotation is stopped. After the rotation of the screw is completed, an enable signal of the screw shaft is disconnected, so that the slider cylinder is retracted, and the clamp cylinder clamps the lining of the tray, and then the push plate shaft performs a backward motion to a preset position, the clamp cylinder releases the tray, then the push plate shaft is restored to a safe position, and the slider cylinder is lowered to discharge the tray normally.

The control method of a constrained device of the present application is convenient to operate, which can independently constrain or release two rows of batteries and perform independent constrained or unconstrained operation in different zones, without pressure interference, thereby greatly improving the precision and efficiency of the constrained or unconstrained operation. The control method of a constrained device of the present application is configured with a three-section speed mode for the push plate shaft, namely the push plate shaft is configured with different speeds at different positions, which ensures the stability of the pressure meanwhile ensures the production capacity. Further, the slider cylinder is extended during the rotation of the screw shaft, thus it's ensured that the screw bit may be completely screwed into the screw. When the slider cylinder is retracted, the enable signal of the screw shaft is disconnected first, which ensures that the screw bit and the screws are in movable states, so as to reduce the operation failure of the constrained device.

## Claims

1. A control method of a constrained device, comprising:
S1, a constrained process: after system initialization, starting in an automatic mode, determining if a tray is in a zone A and a zone B of the constrained device, if yes, lifting the tray; otherwise, requesting a conveyer to feed with a tray, and lifting the tray after the tray is in place; independently performing a constrained operation in the zone A or the zone B to constrain batteries in the zone A or the zone B once the tray in the zone A or the zone B is lifted in place; judging if all the batteries in the zone A and the zone B are constrained and pressed, if yes, discharging the tray; otherwise, re-constraining all the batteries in the zone A and the zone B, and then discharging the tray;
S2, an unconstrained process: after system initialization, starting in an automatic mode, determining if a tray is in a zone A and a zone B of the constrained device, if yes, lifting the tray; otherwise, requesting a conveyer to feed with a tray, and lifting the tray after the tray is in place; independently performing an unconstrained operation in the zone A or the zone B to release batteries in the zone A or the zone B once the tray in the zone A or the zone B is lifted in place; judging if all the batteries in the zone A and the zone B are unconstrained and released, if yes, discharging the tray; otherwise, rechecking and releasing all the batteries in the zone A and the zone B, and then discharging the tray.

2. The control method of a constrained device according to claim 1, wherein the constrained operation in the zone A or the zone B comprises rotating a screw bit to extend an slider cylinder, stopping the rotation once the screw bit are screwed into a screw, and performing a forward motion of a push plate shaft to a preset position, rotating the screw to constrain and press the batteries in the tray; once a torque of a screw shaft of the screw reaches a preset torque, judging if the screw is rotated in place by judging if the slider cylinder is extended in place; after the rotation of the screw is completed, disconnecting an enable signal of the screw, retracting the slider cylinder, restoring the push plate shaft to a safe position, and lowering the slider cylinder to discharge the tray normally.

3. The control method of a constrained device according to claim 1, wherein the unconstrained operation in the zone A or the zone B comprises rotating a screw bit to extend outside, and stopping the rotating once the screw bit are screwed into a screw; performing a forward motion of a push plate shaft to a preset position, and reversely rotating the screw to release the batteries in the tray; stopping the rotation of the screw once a screw shaft of the screw reaches a position; after the rotation of the screw is completed, disconnecting an enable signal of the screw, retracting the slider cylinder, clamping a lining of the tray by a clamp cylinder, and then performing a backward motion of the push plate shaft to a preset position, releasing the tray, restoring the push plate shaft to a safe position, and lowering the slider cylinder to discharge the tray normally.

4. The control method of a constrained device according to claim 2, wherein the forward motion of the push plate shaft during the constrained operation comprises three sections:
after the screw bit are screwed into the screw and stopped with rotation, the push plate shaft moving forward at a first speed for a first section;
once a position of the first section is matched with a pressure of the first section, moving forward the push plate shaft moving forward at a second speed for a second section;
once a position of the second section is matched with a pressure of the second section, the push plate shaft moving forward at a third speed lower than the first and second speeds for a third section; and
once a position of the third section is matched with a pressure of the third section, rotating the screw.

5. The control method of a constrained device according to claim 3, wherein the forward motion of the push plate shaft during the unconstrained operation comprises three sections:
after the screw bit are screwed into the screw and stopped with rotation, the push plate shaft moving forward at a first speed for a first section;
once a position of the first section is matched with a pressure of the first section, moving forward the push plate shaft moving forward at a second speed for a second section;
once a position of the second section is matched with a pressure of the second section, the push plate shaft moving forward at a third speed lower than the first and second speeds for a third section; and
once a position of the third section is matched with a pressure of the third section, clamping the tray by the clamp cylinder, and reversely rotating the screw.
